# EUROPÄISCHE PATENTSCHRIFT

(11) **EP 2 208 639 B1**
(45) Veröffentlichungstag und Bekanntmachung des Hinweises auf die Patenterteilung: **21.09.2011**
(21) Anmeldenummer: 10150596.4
(22) Anmeldetag: 13.01.2010
(51) Int. Cl.: B60Q 1/076

(54) **Scheinwerfer für Fahrzeuge**
Headlamp for vehicles
Phare pour véhicules

(30) Priorität: 16.01.2009 DE 102009004870
(43) Veröffentlichungstag der Anmeldung: 21.07.2010
(73) Patentinhaber: Hella KGaA Hueck & Co., 59552 Lippstadt (DE)
(72) Erfinder: Schäfers, Franz-Josef, 33106, Paderborn (DE); Stahmeier, Martin, 33824 Werther (DE)

(56) Entgegenhaltungen:
- EP-A1- 0 484 938
- EP-A1- 0 588 715
- DE-A1-102005 031 809
- DE-A1-102005 033 114
- DE-A1-102005 038 829

## Beschreibung

Die Erfindung betrifft einen Scheinwerfer für Fahrzeuge nach dem Oberbegriff des Patentanspruchs 1.

Aus der DE 10 2006 018 305 A1 ist ein Scheinwerfer für Fahrzeuge bekannt, in dessen Gehäuse ein Lichtmodul sowie eine Verstelleinrichtung zum Verschwenken des Lichtmoduls um eine horizontale und/oder vertikale Schwenkachse vorgesehen ist. Die Verstelleinrichtung umfasst zum einen einen Stellmotor mit einem in Verschieberichtung linear verschiebbaren Stellbolzen, dessen freies Ende mit dem Lichtmodul gekoppelt ist. Durch Betätigen des Stellmotors kann insbesondere eine dynamische Verstellung des Lichtmoduls erfolgen, so dass der von dem Scheinwerfer abgestrahlte Lichtkegel in Abhängigkeit von der aktuellen Verkehrssituation verändert wird. Zum anderen weist die Verstelleinrichtung ein manuell betätigbares Stellmittel auf, das als Kegelzahnradgetriebe ausgebildet sein kann, wobei ein erstes Kegelzahnrad als Hülse ausgebildet ist und drehfest mit dem Stellbolzen verbunden ist. Das andere Kegelzahnrad kann mit einem Ansatz verbunden sein, an dem es mit einem Betätigungselement, beispielsweise einem Schraubendreher koppelbar ist. Hierdurch kann manuell eine vertikale Grundeinstellung des Scheinwerfers durch Verschwenken um eine horizontale Schwenkachse erfolgen. Die bekannte Verstelleinrichtung erfordert, dass sowohl bei elektrischer Betätigung als auch bei manueller Betätigung eine unmittelbare Einwirkung auf den Stellbolzen erfolgt. Bei manueller Betätigung zur Grundeinstellung des Scheinwerfers ändert sich die Relativlage des Stellbolzens zu dem Stellmotor. Diese unmittelbare Beeinflussung ist für bestimmte Anwendungen unerwünscht. Darüber hinaus ist das Vorsehen einer Rutschkupplung erforderlich.

Aus der DE 10 2005 038 829 A1 ist ein Scheinwerfer für Fahrzeuge mit einem durch eine Verstelleinrichtung um eine Achse verschwenkbares Lichtmodul bekannt. Die Verstelleinrichtung umfasst einen Stellmotor, einen Schlitten, an dem der Stellmotor befestigt ist, sowie einen Stellbolzen, der an einem Reflektor des Scheinwerfers angreift. Der Stellmotor, der Schlitten sowie der Stellbolzen sind als gemeinsame Baueinheit in eine Verschieberichtung verschiebbar angeordnet. Zum Verschieben des Schlittens und des Stellmotors ist ein Verstellelement vorgesehen, das mittels eines manuell betätigbaren Stellmittels (Schlitzschraubendreher) bedienbar ist. Ferner ist eine Führungseinrichtung vorgesehen, so dass der Schlitten in der Verschieberichtung beweglich geführt ist.

Aufgabe der vorliegenden Erfindung ist es daher, einen Scheinwerfer für Fahrzeuge mit einer Verstelleinrichtung derart weiterzubilden, dass zum einen eine vorzugsweise manuelle Verstellung eines Lichtmoduls des Scheinwerfers ohne Veränderung der Relativposition eines linear verschiebbaren Stellbolzens zu einem Stellmotor gewährleistet ist und zum anderen eine stabile Führungseinrichtung bereitgestellt wird.

Zur Lösung dieser Aufgabe weist die Erfindung die Merkmale des Patentanspruchs 1 auf.

Ein Vorteil der Erfindung besteht darin, dass zur manuellen Grundeinstellung des Scheinwerfers die Verschiebung des Stellbolzens durch Betätigen eines manuellen Stellmittels erfolgen kann, ohne dass die Relativbewegung des Stellbolzens sich zu dem Stellmotor ändern muss.

Der besondere Vorteil der Erfindung besteht darin, dass durch Ausgestaltung einer Führungseinrichtung mit einem langgestreckten Führungselement (Führungsstange), das koaxial zu einem in Dreheingriff mit dem Schlitten einerseits und mit dem manuell betätigbaren Stellmittel andererseits gekoppelten Verstellelement positioniert ist, bauraumsparend eine stabile und klemmfreie Schlittenführung verwirklicht ist. Die Führungsstange ist in mindestens einem an dem Schlitten angeformten Lagerauge mit Spiel gelagert ist. Dadurch, dass die Lagerung des Schlittens an der Führungsstange quasi in Verlängerung des Verstellelementes erfolgt, kann bei Ausführung der manuellen Grundeinstellung ein unerwünschtes Verkippen des Schlittens quer zur Verschieberichtung sicher vermieden werden. Ein solches Verkippen des Schlittens und damit des Stellmotors würde sich ungünstig auf das Betriebsverhalten des Stellmotors auswirken. Auf diesen soll möglichst keine mechanische Beanspruchung quer zur Verschieberichtung wirken. Grundgedanke der Erfindung ist es, durch Führungsmittel und Antriebsmittel räumlich konzentriert die Führung des Schlittens und des Verstellelementes anzuordnen. Ein unerwünschtes Verkanten von Führungselementen der Führungseinrichtung infolge eines auf den Schlitten wirkenden Kippmomentes kann somit sicher vermieden werden.

Nach einer Weiterbildung der Erfindung ist das Verstellelement als eine Verstellspindel (Gewindestange) ausgebildet, die vorzugsweise mit der Führungsstange zumindest axial fest gekoppelt ist. Die Verstellspindel ist mit einem Gewindeansatz des Schlittens drehbar gekoppelt, so dass die Axialbewegung der Verstellspindel unmittelbar auf eine Axialbewegung des Schlittens übertragen werden kann. Die in axialer Verlängerung der Verstellspindel angeordnete Führungsstange dient ausschließlich zur Führung des Schlittens, so dass kein unerwünschtes Kippmoment entsteht.

Nach einer bevorzugten Ausführungsform der Erfindung ist das Stellmittel als ein Kegelzahnradgetriebe ausgebildet, wobei ein erstes Kegelzahnrad fest mit der Verstellspindel und ein zweites Kegelzahnrad fest mit einem Betätigungsfeld koppelbar sind. Vorteilhaft kann hierdurch eine Richtungsumlenkung bei der Krafteinleitung erfolgen.

Nach einer Weiterbildung der Erfindung weist der Schlitten auf einer dem Gehäuse zugewandten Seite mindestens einen Stützarm auf, der entlang einer Aufnahme des Gehäuses in Verschieberichtung geführt gelagert ist. Hierdurch kann eine zusätzlich stabile Lagerung bzw. Führung des Schlittens erfolgen, ohne dass sich dies in ungünstiger Weise in Form einer Querbeanspruchung des Stellmotors auswirkt.

Nach einer Weiterbildung der Erfindung ist das Kegelzahnradgetriebe in einem Befestigungsschild gelagert, was sich günstig auf die Lagerung der Führungsstange auswirkt.

Ein Ausführungsbeispiel der Erfindung wird nachfolgend anhand der Zeichnungen näher erläutert.

Es zeigen:

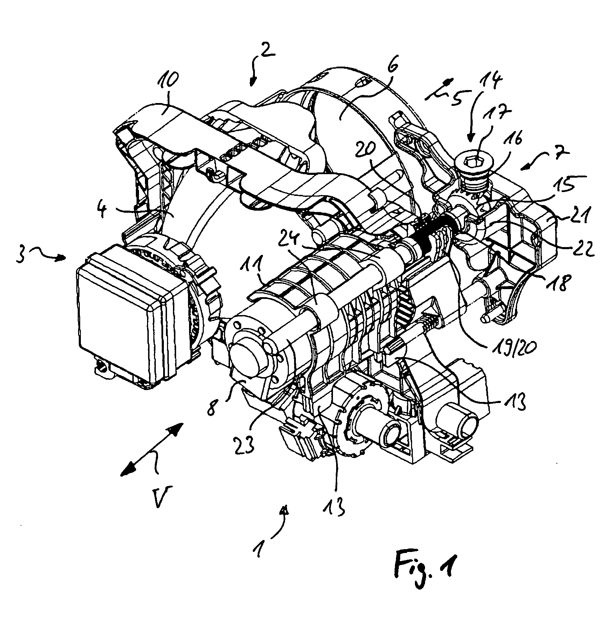

- Fig. 1: eine perspektivische Darstellung des Scheinwerfers von einer Rückseite,

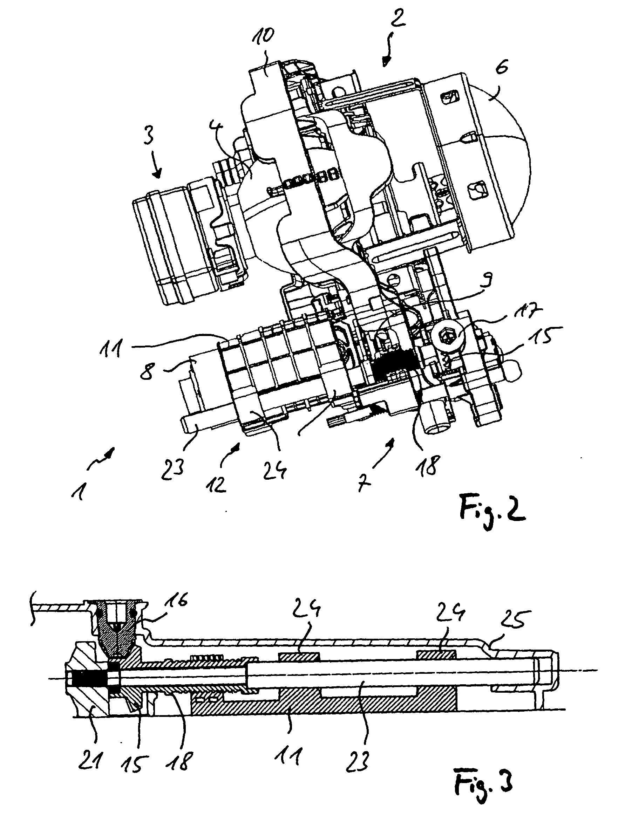

- Fig. 2: eine perspektivische Darstellung des Scheinwerfers von oben und
- Fig. 3: einen Längsschnitt durch eine Verstelleinrichtung des Scheinwerfers.

Ein Scheinwerfer 1 für Fahrzeuge weist ein Lichtmodul 2 auf, das als Projektionslichtmodul ausgebildet ist und im Wesentlichen über eine Lichtquelle 3, einen Reflektor 4, eine Blende sowie eine in Lichtabstrahlrichtung 5 vor dem Reflektor 4 angeordnete Linse 6 besteht.

Der Scheinwerfer 1 weist ferner eine Verstelleinrichtung 7 auf, mittels derer das Lichtmodul 2 um eine horizontale Schwenkachse verstellbar ist.

Die Verstelleinrichtung 7 umfasst einen Stellmotor 8 mit einem linear verschieblichen Stellbolzen 9, der in Abhängigkeit von der Schaltstellung des Stellmotors 8 in einer Verschieberichtung V, die senkrecht zur horizontalen Schwenkachse und parallel zur Fahrzeuglängsachse verläuft, verstellbar ist. Der Stellbolzen 9 weist an seinem freien Ende einen Kugelkopf auf, der in einer Aufnahme eines den Reflektor 4 des Lichtmoduls 2 umgebenden und mit demselben fest verbundenen Tragrahmens 10 gelagert ist. Der Stellmotor 8 wird mittels einer nicht dargestellten elektronischen Steuereinheit angesteuert zur dynamischen Leuchtweiteneinstellung des Scheinwerfers 1 während des Betriebes. Beispielsweise kann der Stellbolzen 8 in Abhängigkeit von der aktuellen Verkehrssituation so verstellt werden, dass in Abhängigkeit von dem vorausfahrenden oder entgegenkommenden Verkehr die Hell-Dunkel-Grenze der von dem Lichtmodul 2 erzeugten Lichtverteilung variiert wird, so dass zum einen eine Blendung der anderen Verkehrsteilnehmer vermieden wird und zum anderen eine möglichst weite Ausleuchtung des Straßenraumes gewährleistet ist. Beispielsweise kann die Blende des Lichtmoduls 2 als eine Blendenwalze ausgebildet sein, die über eine Mehrzahl von in Umfangsrichtung derselben verteilt angeordneten Blendkanten verfügt, die jeweils quer zur optischen Achse des Lichtmoduls 2 verlaufen. Hierdurch können unterschiedliche Lichtverteilungen, wie beispielsweise Stadtlicht, Autobahnlicht, Abblendlicht, Fernlicht, eingestellt werden. Die Ansteuerung des Stellmotors 8 kann auf die verkehrssituationsabhängigen Erfordernisse angepasst werden.

Der Stellmotor 8 ist an einem im Querschnitt teilkreisförmigen Schlitten 11 befestigt, der mit seiner teilkreisförmigen Mantelfläche den Stellmotor 8 in Umfangsrichtung entlang eines stumpfen Winkels umgreift. Der Schlitten 11 ist mittels einer Führungseinrichtung 12 in der Verschieberichtung V geführt gelagert. Die Führungseinrichtung 12 bzw. der Schlitten 11 sind parallel versetzt zur Achse des Stellmotors 8 bzw. des Stellbolzens 9 angeordnet.

Die Führungseinrichtung 12 umfasst zum einen in Verschieberichtung V beabstandet zueinander angeordnete Stützarme 13, die in einer korrespondierenden Aufnahme eines Gehäuses 25 des Scheinwerfers 1 geführt gelagert sind. Die Stützarme 13 weisen jeweils zwei beabstandet zueinander verlaufende Stege auf, zwischen denen sich eine Nut bildet, in die die als Nase ausgebildete Aufnahme des Gehäuses 25 eingreifen kann. Der lichte Abstand der Stege ist derart gewählt, dass der Stützarm 13 mit Spiel auf der Aufnahme des Gehäuses 25 gelagert ist.

Die Verstelleinrichtung 7 weist zum anderen ein manuell betätigbares Stellmittel 14 auf, mittels dessen eine manuelle Grundeinstellung des Lichtmoduls 2 um die horizontale Schwenkachse ermöglicht wird. Das Stellmittel 14 umfasst ein Kegelzahnradgetriebe mit einem ersten Kegelzahnrad 15 und einem zweiten Kegelzahnrad 16. Das zweite Kegelzahnrad 16 ist mit einem Ansatz 17 verbunden zur Kopplung mit einem nicht dargestellten Betätigungselement, Insbesondere einem Hilfswerkzeug. Zu diesem Zweck weist der Ansatz 17 eine Innensechskant-Form auf, so dass ein Inbusschlüssel als Betätigungselement ansetzbar ist. Das erste Kegelzahnrad 15 ist fest mit einem Verstellelement 18 verbunden, das auf den Schlitten 11 einwirkt zur Verschiebung desselben in Verschieberichtung V. Das Verstellelement 18 ist als langgestreckte Verstellspindel (Gewindestange) ausgebildet, die sich in Dreheingriff mit einem Ansatz 19 des Schlittens 11 befindet. Der Ansatz 19 des Schlittens 11 weist zwei Klammerarme 20 mit jeweils einem Innengewinde auf, die in Gewindeeingriff mit der ein Außengewinde aufweisenden Verstellspindel 18 stehen. Durch Betätigen des nicht dargestellten Inbusschlüssel unter Eingreifen desselben in den Ansatz 17 wird das zweite Kegelzahnrad 16 verdreht, die Drehbewegung auf das erste Kegelzahnrad 15 übertragen, so dass die Verstellspindel 18 um ihre Achse verdreht wird. Mittels des Gewindeeingriffs der Klammerarme 20 des Schlittens 11 wird die Drehbewegung der Verstellspindel 18 in eine translatorische bzw. lineare Bewegung des Schlittens 11 in Verschieberichtung V umgewandelt. Synchron zu dem Schlitten 11 wird der Stellmotor 8 mit dem Stellbolzen 9 bewegt, so dass in Abhängigkeit von dem Drehwinkel des Kegelzahnradgetriebes 14 eine Verschiebung der Baueinheit "Schlitten 11 - Stellmotor 8 - Stellbolzen 9" in Verschieberichtung V erfolgt und ein Verschwenken des Lichtmoduls 2 um die horizontale Schwenkachse entsprechend einem vorgegebenen Verschwenkwinkel erfolgt.

Das erste Kegelzahnrad 15 des Kegelzahnradgetriebes 14 ist in einer Mulde 22 eines Befestigungsschildes 21 gelagert, das mit dem Gehäuse 25 fest verbunden ist. Hierdurch kann eine stabile Lagerung der Stellmittel 14, 15, 16, 18 gewährleistet sein. Die Mulde 22 ist derart ausgebildet, dass das erste Kegelzahnrad 15 drehbar gelagert ist.

Die Führungseinrichtung 12 weist als Führungselement eine Führungsstange 23 auf, die in koaxial angeordneten und an dem Schlitten 11 angeformten Lageraugen 24 mit Spiel gelagert ist. Die Lageraugen 24 sind in Verschieberichtung V beabstandet zueinander angeordnet. Dadurch, dass die Führungsstange 23 koaxial bzw. in axialer Verlängerung der Verstellspindel 18 angeordnet ist, kann eine Führung des Schlittens 11 sowie eine manuelle Verstellung des Lichtmoduls 2 ohne das Auftreten von auf den Stellmotor 8 wirkenden Kippmomenten bzw. mechanischer Beanspruchung in Querrichtung desselben erfolgen. Im vorliegenden Ausführungsbeispiel ist die Führungsstange 23 mit einem Endabschnitt derselben in einer Aufnahmeöffnung der teilweise hohlzylinderförmigen Verstellspindel 18 fest verbunden. Der Endabschnitt der Führungsstange 23 ist dabei in der Aufnahmeöffnung der Verstellspindel 18 eingepresst.

Alternativ kann die Führungsstange 23 auch lediglich axial fest mit der Verstellspindel 18 verbunden sein. In diesem Fall kann die Führungsstange 23 fest mit dem Schlitten 11 verbunden sein.

Nach einer weiteren Alternative ist die Führungsstange 23 auch lediglich drehfest mit der Verstellspindel 18 verbunden.

Die Führungsstange 23 ist aus einem massiven Metallmaterial, beispielsweise Stahl, gefertigt. Der Schlitten 11, die Verstellspindel 18 und die weiteren Stellmittel 14 sind vorzugsweise aus einem Kunststoffmaterial hergestellt.

Nach einer alternativen Ausführungsform kann die Verstelleinrichtung 7 auch so ausgelegt sein, dass das Lichtmodul um eine vertikale Schwenkachse verstellbar ist.

### Bezugszeichenliste

- 1: Scheinwerfer
- 2: Lichtmodul
- 3: Lichtquelle
- 4: Reflektor
- 5: Lichtabstrahlrichtung
- 6: Linse
- 7: Verstelleinrichtung
- 8: Stellmotor
- 9: Stellbolzen
- 10: Tragrahmen
- 11: Schlitten
- 12: Führungseinrichtung
- 13: Stützarm
- 14: Stellmittel / Kegelzahnradgetriebe
- 15: erstes Kegelzahnrad
- 16: zweites Kegelzahnrad
- 17: Ansatz
- 18: Verstellelement
- 19: Ansatz
- 20: Klammerarme
- 21: Befestigungsschild
- 22: Mulde
- 23: Führungsstange
- 24: Lagerauge
- 25: Gehäuse
- V: Verschieberichtung

## Patentansprüche

1. Scheinwerfer für Fahrzeuge mit einem Lichtmodul (2), das in einem Gehäuse des Scheinwerfers (1) angeordnet ist und das mit einer Verstelleinrichtung (7) gekoppelt ist zum Verschwenken des Lichtmoduls (2) um eine horizontale und/oder vertikale Schwenkachse, dass die Verstelleinrichtung (7) einen Stellmotor (8) mit einem in Verschieberichtung (V) linear verschiebbaren Stellbolzen (9) aufweist, der über ein freies Ende desselben mit dem Lichtmodul (2) gekoppelt ist, dass ein manuell betätigbares Stellmittel (14) vorgesehen ist, mittels dessen der Stellbolzen (9) in Verschieberichtung (V) verschiebbar ist,
- dass der Stellmotor (8) an einem Schlitten (11) befestigt ist, der über eine Führungseinrichtung (12) parallel versetzt zu dem Stellbolzen (9) geführt gelagert ist,
- dass das manuell betätigbare Stellmittel (14) auf ein in Dreheingriff mit dem Schlitten (11) stehendes Verstellelement (18) einwirkt zum Verschieben des Schlittens (11) und des Stellmotors (8) in Verschieberichtung (V) und
- dass die Führungseinrichtung (12) ein parallel zu dem Stellbolzen (9) verlaufendes Führungselement (23) aufweist, das koaxial zu dem Verstellelement (18) angeordnet ist und derart mit dem Verstellelement (18) zusammenwirkt, dass der Schlitten (11) in der Verschieberichtung (V) beweglich geführt ist, **dadurch gekennzeichnet, dass**
das Führungselement (23) als eine Führungsstange ausgebildet ist, die in mindestens einem an dem Schlitten (11) angeformten Lagerauge (24) mit Spiel gelagert ist.

2. Scheinwerfer nach Anspruch 1, **dadurch gekennzeichnet, dass** das Verstellelement (18) als eine Verstellspindel ausgebildet ist, die mit der Führungsstange (23) gekoppelt ist.

3. Scheinwerfer nach Anspruch 2, **dadurch gekennzeichnet, dass** die Verstellspindel (18) zumindest teilweise hohlzylinderförmig ausgebildet ist mit einer Aufnahmeöffnung zur Aufnahme eines Endabschnitts der Verstellstange (23).

4. Scheinwerfer nach Anspruch 2 oder 3, **dadurch gekennzeichnet, dass** als Stellmittel (14) ein Kegelzahnradgetriebe vorgesehen ist, wobei ein erstes Kegelzahnrad (15) fest mit der Verstellspindel (18) verbunden ist und ein zweites Kegelzahnrad (16) fest mit einem Ansatz (17) verbunden ist zur Kopplung mit einem Betätigungselement.

5. Scheinwerfer nach einem der Ansprüche 1 bis 4, **dadurch gekennzeichnet, dass** der Schlitten (11) im Querschnitt zumindest teilkreisförmig ausgebildet ist, derart, dass er den Stellmotor (8) teilweise umgreift.

6. Scheinwerfer nach Anspruch 4 oder 5, **dadurch gekennzeichnet, dass** der Schlitten (11) auf einer dem Kegelzahnradgetriebe zugewandten Seite einen Ansatz (19) mit einem Innengewinde aufweist, der sich in Dreheingriff mit der Verstellspindel (18) befindet.

7. Scheinwerfer nach einem der Ansprüche 1 bis 6, **dadurch gekennzeichnet, dass** die Führungsstange (23) fest mit der Verstellspindel (18) verbunden ist.

8. Scheinwerfer nach einem der Ansprüche 1 bis 7, **dadurch gekennzeichnet, dass** der Schlitten (11) auf einer dem Gehäuse (25) zugewandten Seite mindestens einen Stützarm (13) aufweist, der an einer Aufnahme des Gehäuses (25) in Verschieberichtung (V) geführt gelagert ist.

9. Scheinwerfer nach einem der Ansprüche 4 bis 8, **dadurch gekennzeichnet, dass** das Kegelzahnradgetriebe (14) an einem Befestigungsschild (21) gelagert ist, wobei das Befestigungsschild (21) mit dem Gehäuse (25) fest verbunden ist.

## Claims

1. Headlamp for motor vehicles with a light module (2) being arranged in a housing of the headlamp (1) and being coupled to an adjustment device (7) for the swiveling of the light module (2) around a horizontal and/ or vertical swivel axis, the adjustment device (7) having an actuator motor (8) with a stop latch (9) being linearly slidable in a sliding direction (V), which, by means of a free end of the same, is coupled with the light module (2), that a manually operable adjusting means (14) is provided, by means of which the stop latch (9) is slidable in the sliding direction (V),
- that the actuator motor (8) is fastened to a slide (11) being bedded in a guided manner and being set off parallel to the stop latch (9)by means of a guiding device (12),
- that the manually operable adjustment means (14) acts upon an adjustment element (18) being in rotational engagement with the slide (11), for the sliding of the slide (11) and of the actuator motor (8) in the sliding direction (V) and
- that the guiding device (12) has a guiding element (23) running parallel to the stop latch (9) and being arranged coaxially with the adjustment element (18) and acting in such a manner with the adjusting element (18), that the slide (11) is embedded in a movable manner in the sliding direction (V), **characterized in that**
The guiding element (23) is embodied as a guiding rod, which is embedded with play in at least one bearing lug (24) integrally molded on the slide (11).

2. Headlamp according to claim 1, **characterized in that** the adjustment element (18) is embodied as an adjusting spindle being coupled with the guiding rod (23).

3. Headlamp according to claim 2, **characterized in that** the adjusting spindle (18) is at least partly embodied in the shape of a hollow cylinder and has a receiving opening for the reception of one end section of the adjusting rod (23).

4. Headlamp according to claim 2 or 3, **characterized in that** a bevel gear mechanism is provided as adjustment means (14), wherein a first bevel gear (15) is permanently connected with the adjusting spindle (18) and a second bevel gear (16) is permanently connected with an attachment piece (17) for the coupling with an operating element.

5. Headlamp according to one of the claims 1 to 4, **characterized in that** the slide (11) has at least partly a circular cross-section, such that it partly encompasses the actuator motor (8).

6. Headlamp according to claim 4 or 5, **characterized in that** the slide (11) has, on a side facing the bevel gear mechanism, an attachment piece (19) having an internal thread and being in rotational engagement with the adjusting spindle (18),

7. Headlamp according to one of the claims 1 to 6, **characterized in that** the guiding rod (23) is permanently connected with the adjusting spindle (18).

8. Headlamp according to one of the claims 1 to 7, **characterized in that** the slide (11), on a side facing the housing (25), has at least one support arm (13) being embedded in a guided manner in the sliding direction (V) in a reception of the housing (25).

9. Headlamp according to one of the claims 4 to 8, **characterized in that** the bevel gear mechanism (14) is embedded in a fastening shield (21), wherein the fastening shield (21) is permanently connected to the housing (25).

## Revendications

1. Projecteur pour véhicules automobiles avec un module d'éclairage (2) disposé dans un boîtier du projecteur (1) et qui est accouplé à un dispositif de réglage (7) pour pivoter le module d'éclairage (2) autour d'un axe horizontal et/ou vertical, que le dispositif de réglage (7) présente un moteur de réglage (8) avec un boulon de réglage (9) linéairement déplaçable en direction de déplacement (V), qui est accouplé au module d'éclairage (2) par un bout libre de celui-ci, qu'un moyen de réglage (14) manuellement réglable est prévu par lequel le boulon de réglage (9) peut être déplacé en direction de déplacement (V),
- que le moteur de réglage (8) est fixé sur une coulisse (11) qui est monté sur palier de guidage par un dispositif de guidage (12) décalé parallèlement au boulon de réglage (9),
- que le moyen de réglage (14) manuellement réglable agit sur un élément de réglage (18) en interaction rotative avec la coulisse (11) pour décaler la coulisse (11) et le moteur de réglage (8) en direction de décalage (V) et
- que le dispositif de guidage (12) présente un élément de guidage (23) parallèle au boulon de réglage (9) qui est disposé coaxialement à l'élément de réglage (18) et qui est en interaction avec l'élément de réglage (18) de telle manière que la coulisse (11) soit guidée de manière mobile en direction de déplacement (V), **caractérisé en ce que**
l'élément de guidage (23) est réalisé en tant que tige de guidage qui est monté sur palier à jeu sur au moins un oeil de palier (24) formé sur la coulisse (11).

2. Projecteur selon la revendication 1, **caractérisé en ce que** l'élément de réglage (18) est réalisé en tant que arbre de réglage qui est accouplé à la tige de réglage (23).

3. Projecteur selon la revendication 2, **caractérisé en ce que** l'arbre de réglage (18) est réalisé au moins partiellement sous forme d'un cylindre creux avec une ouverture de logement pour loger le bout de la tige de réglage (23).

4. Projecteur selon la revendication 2 ou 3, **caractérisé en ce qu'**un engrenage conique est prévu comme moyen de réglage (14), une première roue dentée conique (15) étant solidaire avec l'arbre de réglage (18) et une deuxième roue dentée conique étant solidaire avec un épaulement (17) pour l'accouplage à un élément de manoeuvre.

5. Projecteur selon l'une des revendications 1 à 4, **caractérisé en ce que** la coulisse (11) est réalisée en section au moins sous forme de cercle primitif de telle manière qu'il entoure partiellement le moteur de réglage (8).

6. Projecteur selon la revendication 4 ou 5, **caractérisé en ce que** la coulisse (11) présente un épaulement (19) à filetage femelle sur le côté dirigé vers l'engrenage conique qui est en interaction rotative avec l'arbre de réglage (18).

7. Projecteur selon l'une des revendications 1 à 6, **caractérisé en ce que** la tige de réglage (23) est solidaire avec l'arbre de réglage (18).

8. Projecteur selon l'une des revendications 1 à 7, **caractérisé en ce que** la coulisse (11) présente au moins un bras de support (13) sur le côté dirigé vers le boîtier (25) qui est monté sur palier de guidage sur un logement du boîtier (25) en direction de déplacement V).

9. Projecteur selon l'une des revendications 4 à 8, **caractérisé en ce que** l'engrenage conique (14) est monté sur palier sur une plaque de fixation (21), la plaque de fixation (21) étant solidaire avec le boîtier (25).
